# EUROPEAN PATENT APPLICATION

(11) **EP 1 028 278 A2**
(43) Date of publication of application: **16.08.2000**
(21) Application number: 00301008.9
(22) Date of filing: 09.02.2000
(51) Int. Cl.: F16K 1/46

(54) **Valve seal**

(30) Priority: 09.02.1999 US 247243
(71) Applicant: Applied Materials, Inc., Santa Clara, California 95054 (US)
(72) Inventor: Fairbairn, Kevin, Los Gatos California 95032 (US)
(74) Representative: Bayliss, Geoffrey Cyril

(57) **Abstract**

The disclosure relates to a simple and effective seal for a valve (16) for forming a sealed connection around an opening (14) of a wall (12) comprises a resilient sealing member (22) and a barrier seal (24). The resilient sealing member is disposed at least partially in a valve seat (20) of the valve. The barrier seal is attached to the valve and has a barrier surface (32) that substantially blocks the opening when the valve is closed. The barrier seal has an edge (30) that is disposed adjacent the resilient sealing member. The edge is beveled in a specific embodiment. When the valve is closed, the resilient sealing member (22) is pressed between the valve seat (20) and a sealing surface (32) of the wall to form a sealed connection therebetween. The compressed resilient sealing member exerts a positive force against the edge of the barrier seal to press the barrier surface against the sealing surface of the wall, thereby at least substantially preventing gas flow between the opening and the resilient sealing member to protect the resilient sealing member from any corrosive gases that may be present.

## Description

The present invention relates to valve seals. More particularly, the present invention is directed toward a valve seal that is especially suitable for operating with a prolonged life in corrosive environments.

Valves are commonly used to block openings for isolating enclosures, separating regions of different environments, and the like. Valves are used in many applications, including semiconductor fabrication equipment. For instance, many semiconductor fabrication processes occur in reduced pressure regimes and/or gas flow environments. Much of the equipment used to perform these processes incorporates vacuum systems. In order to reduce the gas density, and thereby the gas pressure in a gas-filled volume, gas particles must be removed. Vacuum pumps are used to perform this task. Valves in vacuum systems are used to separate different parts of the system from one another. For example, a valve located between the chamber and a high vacuum pump is known as a high-vacuum valve. The most widely used high-vacuum valve is the gate or sliding type.

Valve seals are often used with the valves to form tightly sealed connections that preserve conditions in an enclosure and prevent gas leaks or loss of a controlled environment therein. An O-ring is commonly used as a radial seal or a face seal between interengaging components, such as a valve and an opening of a chamber wall that is covered by the valve when the valve is closed. The O-ring can be made of a range of resilient materials such as Viton™. For corrosive environments created by the presence of corrosive gases such as fluorine and chlorine in chemical vapor deposition (CVD) or etch processes, valve seals are typically made with chemically resistant materials such as Chemraz™ and Kemraz™. Even the lives of these so-called chemically resistant materials are greatly reduced under the attack of the very corrosive halogen gases or the like.

What is needed is a more effective seal that can operate with a prolonged life in corrosive environments such as those present in semiconductor fabrication equipment.

The present invention provides a simple and effective seal for a valve for forming a sealed connection around an opening of a wall when the valve is moved to the closed position to cover the opening, while protecting the seal from chemical attack by corrosive gases that may be present. The invention does so by providing a chemically resistant barrier seal that blocks gas flow between the opening and a resilient sealing member. When the valve is closed, the resilient sealing member is compressed between the wall and the valve to seal the connection and to generate a positive force acting on the barrier seal to ensure a tight seal around the opening. In this way, the flow of any corrosive gas between the opening and the resilient sealing member is prevented or at least minimized.

One embodiment of the invention is directed to a seal for a valve for sealing an opening in a wall having a sealing surface. The valve has a valve seat and is movable between an open position and a closed position. The opening is covered by the valve and the seal in the closed position. The seal comprises a resilient sealing member disposed at least partially in the valve seat. The resilient sealing member is pressed between the valve seat and the sealing surface of the wall in the closed position. A barrier seal having a barrier surface and an edge is fastenable to the valve with the edge disposed adjacent the resilient sealing member. The barrier surface at least substantially covers the opening in the closed position, and the pressed resilient sealing member bears against the edge to press the barrier surface of the barrier seal against the sealing surface of the wall.

Another embodiment of the invention is a seal for sealing a connection between a valve and a wall having a sealing surface with an opening. The valve has a valve seat and is movable between an open position and a closed position. The opening is covered by the valve and the seal in the closed position. The seal comprises a seal insert having an insert surface and an insert edge. The seal insert is attachable to the valve. The insert surface at least substantially covers the opening in the closed position. The seal further comprises resilient means disposed adjacent the insert edge and pressed between the valve seat and the sealing surface for sealing a connection between the valve seat and the sealing surface in the closed position and pressing the insert edge to bear the insert surface against the sealing surface of the wall to at least substantially prevent gas flow between the opening and the resilient means.

Another embodiment is directed to a seal for a valve for sealing an opening in a wall having a sealing surface. The valve has a valve seat and is movable between an open position and a closed position. The opening is covered by the valve and the seal in the closed position. The seal comprises a barrier seal having a barrier surface and a barrier edge. The barrier surface at least substantially blocks the opening in the closed position. The seal further comprises means for attaching the barrier seal to the valve. A resilient seal is disposed adjacent the barrier edge and pressed between the valve seat and the sealing surface of the wall in the closed position to exert a force against the barrier edge to push the barrier surface against the sealing surface of the wall.

For a further understanding of the objects and advantages of the present invention, reference should be made to the ensuing detailed description taken in conjunction with the accompanying drawings.
Fig. 1. is a cross-sectional view of valve with a seal covering an opening of a wall in accordance with an embodiment of the present invention;
Fig. 2 is a partial view of the valve and seal of Fig. 1 in an open position; and
Fig. 3 is a partial view of the valve and seal of Fig. 1 in a closed position schematically illustrating a sealing force created by the seal.

The present invention provides a sealing arrangement that effectively seals a connection between a valve and a wall to close an opening in the wall. The sealing arrangement protects vulnerable sealing materials from any attack of a corrosive environment that may be created by the presence of corrosive halogen gases, such as fluorine and chlorine which are typical in semiconductor fabrication equipment.

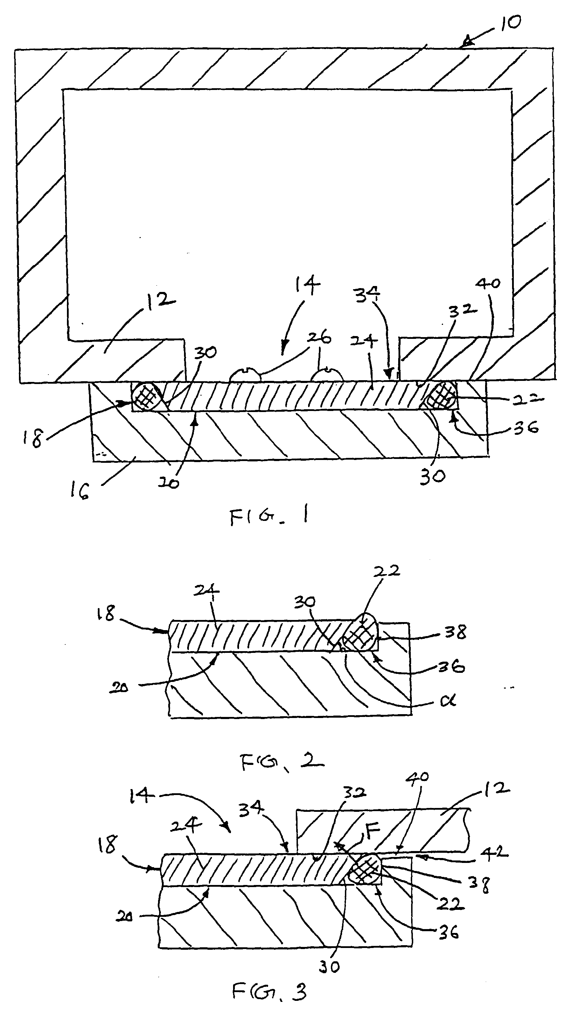

Fig. 1 shows a chamber 10 having a chamber wall 12 with an opening 14 that is to be sealed with a valve 16 and seal 18. The opening 14 typically is circular or rectangular, and is covered by the valve 16 and seal 18 in a closed position. The valve 16 is movable to an open position (see Fig. 2) to unblock the opening 14 by a gate-type or sliding-type mechanism (not shown) or the like as known in the art. In a specific embodiment, the chamber 10 is a semiconductor process chamber which operates at sub-atmospheric pressure (e.g., about 2-16 torr). Of course, the chamber 10 is just one example to illustrate the use of the valve 16 and seal 18. The present invention can be adapted for many other applications.

The valve 16 has a valve cavity or seat 20 which supports the seal 18 at the opening 14. The seal 18 comprises a resilient sealing member 22 and a barrier seal or seal insert 24. The resilient sealing member 22 is made of a resilient material such as an elastomer. In a specific embodiment, the resilient sealing member 22 is an O-ring. Typical materials for the resilient sealing member 22 include Viton™, Chemraz™, and Kemraz™. The resilient sealing member 22 is disposed at least partially in the valve seat 20. The barrier seal 24 is coupled to the valve 16. In this embodiment, the barrier seal 24 is attached to the valve seat 20 by fasteners 26 such as screws which extend through apertures (not shown) of the barrier seal 24 into the valve 16. When attached, the edge 30 of the barrier seal 24 is disposed adjacent the resilient sealing member 22. In the specific embodiment shown, the barrier edge 30 is slanted or beveled so that it holds the resilient sealing member 22 in place relative to the valve seat 20. The angle α of the beveled edge 30 relative to the surface of the valve seat 20 may vary. In a specific embodiment, the angle α is desirably between about 45° and about 60°.

In this embodiment, the surface of the valve seat 20 and the sealing surface 32 of the chamber wall 12 are substantially planar and parallel, so that the barrier seal 24 has a substantially plate-like shape. It is understood that other geometries and shapes are possible. In the closed position shown in Fig. 1, the barrier surface 34 of the barrier seal 24 facing the opening 14 is pushed against the sealing surface 32 of the chamber wall to cover and block the opening 14. The barrier seal 24 and fasteners 26 are advantageously made of chemically resistant materials that are at least substantially nonreactive to any corrosive gas that may be present in the chamber 10. For instance, PTFE or Teflon™ can be used to resist attack from corrosive halogen gases such as fluorine or chlorine. PTFE is also suitable for use in other corrosive environments.

The structural relationship and forces generated in the valve 16 and the seal 18 are shown more clearly in Figs 2 and 3. When the barrier seal 24 is attached to the valve 16, a groove 36 is formed between the edge 30 of the barrier seal 24 and the edge 38 of the valve seat 20 for holding the resilient sealing member 22 in place. Prior to closing the valve 16 against the opening 14, as seen in Fig. 2, the resilient sealing member 22 typically sets proud of (slightly above) the groove 36. In this open position, the resilient sealing member 22 may be under compression in the groove 36 between the barrier edge 30 and the valve seat 20, but may alternatively be substantially free of compression. When the valve 16 is moved to the closed position to block the opening 14, as illustrated in Fig. 3, the resilient sealing member 22 is pressed between the sealing surface 32 of the chamber wall 12 and the groove 36 in the valve seat 20.

The compression of the resilient sealing member 22 not only seals the connection between the valve 16 and the sealing surface 32, but also generates a positive force F acting on the beveled edge 30 to press the barrier seal 24 against the sealing surface 32. This aids in forming a tight seal between the barrier surface 34 of the barrier seal 24 and the sealing surface 32 of the wall 12, thereby preventing or at least minimizing gas flow between the opening 14 and the resilient sealing member 22. The barrier seal 24 thus protects the resilient sealing member 22 from attack by any corrosive gas that may be present in the chamber 10.

To ensure a tight seal between the barrier surface 34 and the sealing surface 32, the valve surface 40 of the valve 16 is substantially aligned with the barrier surface 34 to form aligned contacts with the sealing surface 32 of the wall 12 (see Fig. 1). Alternatively, the valve surface 40 is spaced by a small gap 42 from the sealing surface 32 of the wall 12 in the closed position, as shown in Fig. 3. In addition, the dimensions of the resilient sealing member 22, the barrier seal 24, and the groove 36 in the valve seat 20 are preferably selected to allow for a preset compression of the resilient sealing member 22 in the closed position. In a specific embodiment, the preset compression is desirably between about 20% and about 30%, and more desirably about 25%.

The above-described arrangements of apparatus and methods are merely illustrative of applications of the principles of this invention and many other embodiments and modifications may be made without departing from the spirit and scope of the invention as defined in the claims. For instance, the shapes of the valve 16, valve seat 20, resilient sealing member 22, barrier seal 24, and barrier edge 30 may be altered while still achieving the result of forming a sealed connection of the barrier seal 24 around the opening 14 to block gas flow between the opening 14 and the resilient sealing member 22. Further, other suitable ways of attaching the barrier seal 24 to the valve 16 may be used instead of the fasteners 26 shown in Fig. 1. The scope of the invention should, therefore, be determined not with reference to the above description, but instead should be determined with reference to the appended claims along with their full scope of equivalents.

## Claims

1. A seal for a valve for sealing an opening in a wall having a sealing surface, said valve having a valve seat and being movable between an open position and a closed position, said opening being covered by said valve and said seal in said closed position, said seal comprising:
a resilient sealing member disposed at least partially on said valve seat, said resilient sealing member pressed between said valve seat and said sealing surface of said wall in said closed position; and
a barrier seal having a barrier surface and an edge, said barrier seal being fastenable to said valve with said edge disposed adjacent said resilient sealing member, said barrier surface at least substantially covering said opening in said closed position and said pressed resilient sealing member bearing against said edge to press said barrier surface of said barrier seal against said sealing surface of said wall.

2. A seal as claimed in claim 1, wherein said resilient sealing member comprises an O-ring.

3. A seal as claimed in claim 1 or claim 2, wherein said resilient sealing member comprises an elastomer material.

4. A seal as claimed in any of claims 1 to 3, wherein said barrier seal includes apertures for receiving fasteners fastening said barrier seal to said valve.

5. A seal as claimed in any of claims 1 to 4, wherein said barrier seal is disposed at least partially in said valve seat.

6. A seal as claimed in any of claims 1 to 5, wherein said edge of said barrier seal is beveled.

7. A seal as claimed in claim 6, wherein said valve seat has a substantially planar seat surface and said beveled edge forms an angle with said seat surface of between about 45° and about 60°.

8. A seal as claimed in any of claims 1 to 7, wherein said resilient sealing member is compressed by between about 20% and about 30% in said closed position.

9. A seal as claimed in any of claims 1 to 8, wherein said resilient sealing member is compressed by about 25% in said closed position.

10. A seal as claimed in any of claims 1 to 9, wherein said barrier seal comprises a material that is chemically resistant to corrosive halogen gases.

11. A seal as claimed in claim 10, wherein said chemically resistant material comprises PTFE.

12. A seal for sealing a connection between a valve and a wall having a sealing surface with an opening, said valve having a valve seat and being movable between an open position and a closed position, said opening being covered by said valve and said seal in said closed position, said seal comprising:
a seal insert having an insert surface and an insert edge, said seal insert being attachable to said valve, said insert surface at least substantially covering said opening in said closed position; and
resilient means disposed adjacent said insert edge and pressed between said valve seat and said sealing surface for sealing a connection between said valve seat and said sealing surface in said closed position and pressing said insert edge to bear said insert surface against said sealing surface of said wall to at least substantially prevent gas flow between said opening and said resilient means.

13. A seal as claimed in claim 12, wherein said insert edge is beveled.

14. A seal as claimed in claim 13, wherein said beveled insert edge constrains said resilient means at least partially in said valve seat when said seal insert is attached to said valve.

15. A seal as claimed in any of claims 12 to 14, wherein said seal insert comprises a chemically nonreactive material.

16. A seal for a valve for sealing an opening in a wall having a sealing surface, said valve having a valve seat and being movable between an open position and a closed position, said opening being covered by said valve and said seal in said closed position, said seal comprising:
a barrier seal having a barrier surface and a barrier edge, said barrier surface at least substantially blocking aid opening in said closed position;
means for attaching said barrier seal to said valve; and
a resilient seal disposed adjacent said barrier edge and pressed between said valve seat and said sealing surface of said wall in said closed position to exert a force against said barrier edge to push said barrier surface against said sealing surface of said wall.

17. A seal as claimed in claim 16, wherein said resilient sealing member comprises an elastomeric O-ring.

18. A seal as claimed in claim 16 or 17, wherein said barrier seal is disposed at least partially in said valve seat.

19. A seal as claimed in any of claims 16 to 18, wherein said barrier edge is beveled.

20. A seal as claimed in any of claims 16 to 19, wherein said barrier seal comprises a chemically resistant material.
